# EUROPÄISCHE PATENTSCHRIFT

(11) **EP 3 678 901 B1**
(45) Veröffentlichungstag und Bekanntmachung des Hinweises auf die Patenterteilung: **09.06.2021**
(21) Anmeldenummer: 18769080.5
(22) Anmeldetag: 31.08.2018
(51) Int. Cl.: B60R 19/14

(54) **STOSSFÄNGEREINRICHTUNG UND FAHRZEUG MIT EINER STOSSFÄNGEREINRICHTUNG**
BUMPER DEVICE, AND VEHICLE COMPRISING A BUMPER DEVICE
DISPOSITIF PARE-CHOCS ET VÉHICULE ÉQUIPÉ D'UN DISPOSITIF PARE-CHOCS

(30) Priorität: 04.09.2017 DE 102017215498
(43) Veröffentlichungstag der Anmeldung: 15.07.2020
(73) Patentinhaber: Bayerische Motoren Werke Aktiengesellschaft, 80809 München (DE)
(72) Erfinder: SENF, Axel, 81541 Muenchen (DE)
(86) Internationale Anmeldenummer: PCT/EP2018/073414
(87) Internationale Veröffentlichungsnummer: WO 2019/043133

(56) Entgegenhaltungen:
- WO-A1-2014/097765
- WO-A2-2007/101285
- DE-A1-102010 031 089
- DE-A1-102011 004 105
- DE-A1-102013 015 701
- US-A1- 2014 091 595

## Beschreibung

### TECHNISCHES GEBIET

Die Erfindung betrifft eine Stoßfängereinrichtung für ein Fahrzeug zum Abstützen von bei einer Kollision des Fahrzeugs mit einer Barriere auftretenden Kräften gemäß dem Oberbegriff des Anspruchs 1. Sie betrifft weiterhin ein Fahrzeug mit zumindest einer derartigen Stoßfängereinrichtung.

### HINTERGRUND DER ERFINDUNG

Bei Fahrzeugkollisionen mit geringfügiger Überdeckung der Fahrzeugsilhouetten (so genannten "Small-Overlap"-Kollisionen), zum Beispiel bei nur 25% Überdeckung bezüglich der Fahrzeugbreite, können die miteinander kollidierenden Fahrzeuge in Bereichen außerhalb der im Fahrzeug vorhandenen Strukturkomponenten aufeinandertreffen, die zum Abbau von Kollisionsenergie vorgesehen sind, so dass diese Strukturkomponenten nur bedingt Kollisionsenergie aufnehmen können.

Zum wirksamen Abbau der Kollisionsenergie kann bei derartigen Small-Overlap-Kollisionen das betreffende Vorderrad mit in die Kraftübertragungsstruktur eingebunden werden, indem es durch die Kollision auf den Seitenschweller des Fahrzeugs geschoben wird und dadurch die Kollisionskräfte in den Seitenschweller eingeleitet werden.

Damit diese Kraftübertragung robust funktioniert, ist eine so genannte Small-Overlap-Sperre als eine distale Krafteinleitungsstruktur der vorderen Stoßfängereinrichtung des Fahrzeugs vorgesehen, die von der Barriere auf das Vorderrad bewegt wird und das Vorderrad fixieren soll, um so ein unkontrolliertes Drehen und Eindringen des Rades in das Fahrzeug zu verhindern.

### STAND DER TECHNIK

Aus der US 2014 0091585A1 ist eine vordere Stoßfängerstruktur für ein Kraftfahrzeug bekannt, bei der ein mittlerer Stoßfängerquerträger an seinen seitlichen Enden mit jeweils einer sich zur Fahrzeugaußenseite erstreckenden Stoßfängerspitze verbunden ist. Die Stoßfängerspitze ist an ihrem freien Ende mit einem schwenkbar daran angelenkten Stützelement verbunden, welches sich seinerseits schwenkbar an einem in Fahrzeuglängsrichtung verlaufenden Stoßfängerstützträger abstützt. Im Falle einer Small-Overlap-Kollision knickt die Stoßfängerspitze am mittleren Stoßfängerquerträger ab und gerät in Anlage mit dem Stützelement. Stoßfängerspitze und Stützelement werden nach hinten verlagert und geraten in Kontakt mit dem Fahrzeugrad. Das Fahrzeugrad geleitet am schräg verlaufenden Stützelement nach außen und stellt sich leicht schräg mit der Radvorderseite zur Fahrzeugaußenseite. Daraufhin trifft die Barriere auf das Fahrzeugrad, das nun zwischen der Barriere und der Fahrzeugkabinenstruktur eingeklemmt ist, so dass die von der Barriere auf das Kraftfahrzeug einwirkenden Kollisionskräfte durch das Fahrzeugrad in die Fahrzeugkabinenstruktur eingeleitet werden.

Bei dieser bekannten Stoßfängereinrichtung wird das Fahrzeugrad nicht ausreichend und nicht schnell genug fixiert, da die Fixierung erst im Augenblick des Auftreffens der Barriere auf das Fahrzeugrad erfolgt. Dadurch trifft das vordere Fahrzeugrad nicht robust auf die Fahrzeugkabinenstruktur und kann sich zwischen dem ersten Kontakt des Fahrzeugs mit der Barriere und dem Kontakt des Fahrzeugrades mit der Barriere unkontrolliert schräg stellen. Die Kollisionskräfte können dann nicht maximal wirksam auf den Seitenschweller der Fahrzeugkabinenstruktur übertragen werden.

Aus der US 2016/0304043 A1 ist eine vordere Stoßfängervorrichtung eines Kraftfahrzeugs bekannt, die an ihren seitlichen Enden mit nach hinten gebogenen, abknickbaren Endabschnitten versehen ist, an welchen jeweils ein nach vorne hervorstehender Aktuatorabschnitt vorgesehen ist, der bei einer Kollision mit einem sich schräg von vorne nähernden Hindernis den Endabschnitt zuerst in Berührung gerät und den betreffenden Endabschnitt nach hinten abknickt und tordiert, ohne dass dabei die für einen Frontalaufprall vorgesehenen Energieverzehrungsmittel verformt werden. Im Falle einer Small-Overlap-Kollision ist vorgesehen, dass das Hindernis zuerst mit dem Stoßfänger kollidiert und dabei die Energieverzehrungsmittel zur Wirkung kommen.

Die WO 2007/101285 A2 zeigt und beschreibt eine Abweisvorrichtung eines vorderen Stoßfängers für eine teilüberdeckte Frontalkollision von Kraftfahrzeugen. Der vordere Stoßfänger ist dazu mit einem Querträger versehen, der sich an einem linken und an einem rechten Längsträger des Kraftfahrzeugs abstützt. Am jeweils seitlich äußeren Ende des Querträgers ist eine U-förmige Führung für einen darin aufgenommenen und lateral verschiebbaren Abweiser schwenkbar an der vorderen Spitze des Längsträgers beziehungsweise des vorderen Querträgers angebracht. Die U-förmige Führung und damit der Abweiser sind somit um eine Hochachse schwenkbar. Der lateral verschiebbare Abweiser ist mittels eines gelenkig daran angelenkten Schwingarms mit dem Längsträger verbunden, wobei der Schwingarm auch am Längsträger um eine Hochachse gelenkig gelagert ist. Der Schwingarm, der Längsträger, die U-förmige Führung und der darin lateral verschiebbare Abweiser bilden ein Viergelenk-Schubgetriebe. Der Abweiser ist mit einem in Fahrtrichtung nach vorne vorstehenden Aktuatorabschnitt versehen. Trifft im Falle einer teilüberdeckten Kollision ein Hindernis auf den Aktuator auf, so wird der lateral verschiebbare Abweiser nach außen gezogen, wobei er sich relativ zur U-förmigen Führung bewegt. Durch diese nach außen gerichtete Bewegung wird der Abweiser derart dem ihm benachbarten Vorderrad angenähert, dass er mit einer rückwärtigen Fläche den seitlich äußeren Umfangsrand des Vorderrades berührt und dabei das Vorderrad mit dessen in Fahrtrichtung vorderem Teil zur Fahrzeugmitte hin verschwenkt. Durch die nach auswärts gerichtete Bewegung des mit dem Vorderrad des Kollisionsgegners in Eingriff befindlichen Abweisers wird auch der vordere Bereich des Vorderrades des Kollisionsgegners zu dessen Fahrzeugmitte hin verschwenkt, so dass die beiden kollidierenden Räder aneinander abgleiten können.

Die WO 2014/097765 A1 zeigt und beschreibt eine vordere Stoßfängerstruktur eines Kraftfahrzeugs, bei welcher ein vorderer Stoßfängerquerträger vorgesehen ist, an dessen zur Fahrzeugaußenseite weisenden seitlichen Enden jeweils eine Querträgerverlängerung aus einem faserverstärkten Kunststoff vorgesehen ist. Diese Querträgerverlängerung weist jeweils einen dem Stoßfängerquerträger benachbarten inneren Abschnitt und einen zur Fahrzeugaußenseite weisenden äußeren Abschnitt auf. Zwischen dem inneren Abschnitt und dem äußeren Abschnitt ist eine in Fahrzeuglängsrichtung geschlitzte Sollbruchstelle vorgesehen, die dafür sorgt, dass im Falle einer teilüberdeckten Kollision der zur Fahrzeugaußenseite weisende Abschnitt der Verlängerung abreißt und entgegen der Bewegungsrichtung des Kraftfahrzeugs, also in Fahrzeuglängsrichtung, nach hinten gegen die Lauffläche des entsprechenden Vorderrades linear verschoben wird und sich daran abstützt.

### DARSTELLUNG DER ERFINDUNG

Aufgabe der vorliegenden Erfindung ist es, eine gattungsgemäße Stoßfängereinrichtung so auszugestalten, dass bei einer Small-Overlap-Kollision eine maximal wirksame Krafteinleitung der Kollisionskräfte durch das vordere Fahrzeugrad in den Seitenschweller der Fahrzeugkabinenstruktur gewährleistet ist.

Diese Aufgabe wird gelöst mit den Merkmalen des Patentanspruchs 1.

Eine solche Stoßfängereinrichtung für ein Fahrzeug ist zum Abstützen von bei einer Kollision des Fahrzeugs mit einer Barriere auftretenden Kräften ausgebildet, wobei das Fahrzeug zumindest zwei parallel zur Fahrzeuglängsrichtung angeordnete Stoßfängerstützträger aufweist, die an ihrem in Fahrtrichtung vorderen Ende mit zumindest einem quer zur Fahrzeuglängsrichtung angeordneten Stoßfängerquerträger verbunden sind, und wobei die Stoßfängereinrichtung jeweils eine über den Stoßfängerquerträger seitlich hinaus ragende distale Krafteinleitungsstruktur aufweist, die zumindest zum Teil vor einem ein Fahrzeugrad aufnehmenden Radhaus gelegen ist, und wobei die jeweilige distale Krafteinleitungsstruktur am Stoßfängerquerträger oder am Stoßfängerstützträger um eine zur Fahrzeughochachse im Wesentlichen parallele Achse schwenkbar gelagert oder abknickbar angebracht ist und einen in Fahrtrichtung nach vorne hervorstehenden Aktuatorabschnitt aufweist. Dabei ist der Begriff Achse nicht im engeren Sinne auf eine Drehachse im Sinne eines Drehgelenks für die distale Krafteinleitungsstruktur beschränkt, sondern umfasst im weiteren Sinne auch einen Bereich, um den die fest am Stoßfängerquerträger oder am Stoßfängerstützträger angebrachte und zur Fahrzeugseite über diesen Bereich hinauskragende distale Krafteinleitungsstruktur abknicken kann. Bei dieser Stoßfängereinrichtung ist die jeweilige distale Krafteinleitungsstruktur erfindungsgemäß so ausgestaltet, dass in deren kollisionsbedingt verschwenktem oder abgeknicktem Zustand das fahrzeugaußenseitige freie Ende der distalen Krafteinleitungsstruktur in Richtung auf die Lauffläche des Fahrzeugrades verlagert ist und das Fahrzeugrad in seiner aktuellen Position fixiert. Das freie Ende steht dazu mit dem Fahrzeugrad, vorzugsweise mit dessen Lauffläche, im Eingriff.

### VORTEILE

Der in Fahrtrichtung nach vorne hervorstehende Aktuatorabschnitt gerät im Falle einer Kollision des Fahrzeugs mit einer Barriere, also beispielsweise mit einem Hindernis oder einem anderen Fahrzeug, zuerst mit der Barriere in Kontakt und überträgt die Kollisionskraft unmittelbar auf die distale Krafteinleitungsstruktur, die daraufhin verschwenkt oder abgeknickt wird, bevor die Barriere mit anderen Strukturteilen des Fahrzeugs in Kontakt gerät oder die Kollisionskräfte diese Strukturteile verformen. Durch diese Verschwenkung oder Abknickung wird das fahrzeugausßenseitige, freie Ende der distalen Krafteinleitungsstruktur in Richtung auf die Lauffläche des hinter der distalen Krafteinleitungsstruktur gelegenen Fahrzeugrades verlagert und fixiert das Fahrzeugrad in seiner aktuellen Position, also im Regelfall in seiner geradeaus gerichteten Radstellung. Wirken dann die Kollisionskräfte auf die anderen Strukturteile des Fahrzeugs ein, also beispielsweise auf den Stoßfängerquerträger und die Stoßfängerstützträger, kann sich das Fahrzeugrad, beispielsweise bei einem unfallbedingten Versagen von Teilen der Lenkgeometrie, nicht verdrehen und bleibt in der Geradeausstellung fixiert bis es durch die kollisionsbedingten Verformungen des Vorderwagens des Fahrzeugs gegen das vordere Ende des Seitenschwellers der Fahrgastzelle gedrückt wird. Dadurch wird es möglich, einen Teil der Kollisionskräfte kontrolliert über das fixierte Fahrzeugrad in den Seitenschweller einzuleiten. Das Fahrzeugrad wird bei der Ausgestaltung der Erfindung folglich frühzeitig fixiert und die bei der Kollision in das Fahrzeug eingeleiteten Kräfte können über das Fahrzeugrad auf den Seitenschweller übertragen werden.

Die so ausgestaltete distale Krafteinleitungsstruktur mit dem in Fahrtrichtung nach vorne über den Stoßfängerquerträger hervorstehenden Aktuatorabschnitt kann als "Small-Overlap-Sperre" bezeichnet werden und kann das Fahrzeugrad schnell fixieren, bevor die Kollisionskräfte das Fahrzeugrad in Richtung Innenraum verdrehen können.

Der Erfinder hat erkannt, dass ein Fixieren des vorderen Fahrzeugrades, insbesondere bei hohen Kollisionsgeschwindigkeiten, nur dann zuverlässig funktioniert, wenn die Fixierung des Rades zeitgleich mit oder sogar noch vor einer kollisionsbedingten Krafteinwirkung auf das Fahrzeugrad erfolgt. Nur ein derart fixiertes Fahrzeugrad kann als Kraftübertragungselement zur kontrollierten Einleitung von Kollisionskräften in den Seitenschweller dienen.

Weitere bevorzugte und vorteilhafte Ausgestaltungsmerkmale der erfindungsgemäßen Stoßfängereinrichtung sind Gegenstand der Unteransprüche 2 bis 12.

Besonders vorteilhaft ist eine Weiterbildung der Erfindung, bei der die jeweilige distale Krafteinleitungsstruktur so ausgestaltet ist, dass die Fixierung des Fahrzeugrades erfolgt bevor die Kollisionskräfte in die Fahrzeugstruktur eingeleitet werden. Das Fahrzeugrad wird dadurch an einem kollisionsbedingten Verschwenken gehindert.

Vorzugsweise weist die jeweilige distale Krafteinleitungsstruktur einen sich quer zur Fahrzeuglängsrichtung erstreckenden Sperrbalken auf, der an dem benachbarten Stoßfängerstützträger oder am Stoßfängerquerträger um die zur Fahrzeughochachse parallele Achse schwenkbar gelagert oder abknickbar angebracht ist, wobei der Aktuatorabschnitt von einem Hebelarm gebildet ist, der mit dem Sperrbalken verbunden ist. Die so ausgestaltete distale Krafteinleitungsstruktur bildet ein Hebelwerk als Aktuatorabschnitt.

Dieses Hebelwerk übersetzt die Bewegung der Barriere über einen außerhalb des Barriereeingriffs gelegenen Drehpunkt und sorgt dafür, dass sich die distale Krafteinleitungsstruktur schneller und damit frühzeitiger als die Barriere in Richtung auf das vordere Fahrzeugrad bewegt.

Dabei ist es besonders vorteilhaft, wenn sich der Hebelarm in Fahrtrichtung und schräg in Richtung zur Fahrzeugaußenseite hin erstreckt.

Gemäß einer vorteilhaften Weiterbildung ist vorgesehen, dass das zur Fahrzeugaußenseite weisende freie Ende des Sperrbalkens einen Eingriffsabschnitt der distalen Krafteinleitungsstruktur bildet, der zum Eingriff mit der Lauffläche des Reifens des vorderen Fahrzeugrades ausgebildet ist, um das Fahrzeugrad zu fixieren.

Vorzugsweise ist die Länge des Sperrbalkens, gemessen von der Achse bis zum distalen Ende des Sperrbalkens, derart bemessen, dass das freie Ende des Sperrbalkens in Kontakt mit dem Fahrzeugrad, vorzugsweise mit dessen Lauffläche, steht, wenn die distale Krafteinleitungsstruktur um die Achse entgegen der Fahrtrichtung nach hinten verschwenkt oder abgeknickt ist.

Dabei ist die Länge des Aktuatorabschnitts, gemessen vom Sperrbalken bis zum freien Ende des Aktuatorabschnitts, bevorzugter Weise derart bemessen, dass bei einer Kollision des Fahrzeugs mit der sich parallel zur Fahrzeugquerrichtung erstreckenden Barriere das freie Ende des Sperrbalkens in Kontakt mit dem Fahrzeugrad gerät bevor die Barriere auf den Stoßfängerquerträger trifft.

Von Vorteil ist es, wenn die Stoßfängereinrichtung so ausgebildet ist, dass die Kollisionskräfte erst dann über das Gelenk und das Fahrzeugrad in die Fahrzeugstruktur eingeleitet werden, wenn die Schwenkbewegung der distalen Krafteinleitungsstruktur beendet ist und sich daraufhin der Sperrbalken am Fahrzeugrad abstützt.

Bei einer bevorzugten Ausführungsform der Erfindung, die mit anderen Ausführungsformen kombinierbar ist, liegt die Achse im Bereich des seitlichen Endabschnitts des Stoßfängerquerträgers.

Alternativ liegt die Achse vom seitlichen Endabschnitt des Stoßfängerquerträgers zur Fahrzeuglängsmittelebene hin abgewandt, also näher an der Fahrzeuglängsmittelebene als bei der vorher beschriebenen Ausführungsform.

Bei einer weiteren alternativen Ausführungsform liegt die Achse im Bereich des vorderen Endes des benachbarten Stoßfängerstützträgers.

Besonders vorteilhaft ist eine Ausführungsform, bei der die Achse außerhalb des Eingriffsbereichs der Barriere mit dem Fahrzeug liegt.

Die Erfindung ist auch gerichtet auf ein Fahrzeug, insbesondere ein Kraftfahrzeug, das zumindest eine erfindungsgemäße Stoßfängereinrichtung aufweist. Obwohl bislang diese Stoßfängereinrichtung als im Vorderwagen eines Fahrzeugs vorgesehene Stoßfängereinrichtung beschrieben worden ist, ist die Erfindung nicht darauf beschränkt. Sie kann genauso gut auch zusätzlich im Hinterwagen des Fahrzeugs als Heck-Stoßfängereinrichtung vorgesehen sein und wirkt dann bei Heckaufprall-Kollisionen mit geringer seitlicher Überdeckung in analoger Weise.

Bevorzugte Ausführungsbeispiele der Erfindung mit zusätzlichen Ausgestaltungsdetails und weiteren Vorteilen sind nachfolgend unter Bezugnahme auf die beigefügte Zeichnung näher beschrieben und erläutert.

### KURZE BESCHREIBUNG DER ZEICHNUNGEN

Es zeigt:
- Fig. 1: eine erste Ausführungsform einer erfindungsgemäßen Stoßfängereinrichtung kurz vor der Kollision des Fahrzeugs mit einer Barriere;
- Fig. 2: die Ausführungsform nach Fig. 1 unmittelbar nach dem kollisionsbedingten Kontakt des Fahrzeugs mit der Barriere;
- Fig. 3: die Ausführungsform nach Fig. 1 mit an den Seitenschweller geschobenem Fahrzeugrad;
- Fig. 4: eine zweite Ausführungsform einer erfindungsgemäßen Stoßfängereinrichtung kurz vor der Kollision des Fahrzeugs mit einer Barriere;
- Fig. 5: die Ausführungsform nach Fig. 4 unmittelbar nach dem kollisionsbedingten Kontakt des Fahrzeugs mit der Barriere;
- Fig. 6: die Ausführungsform nach Fig. 4 mit an den Seitenschweller geschobenem Fahrzeugrad.

### DARSTELLUNG VON BEVORZUGTEN AUSFÜHRUNGSBEISPIELEN

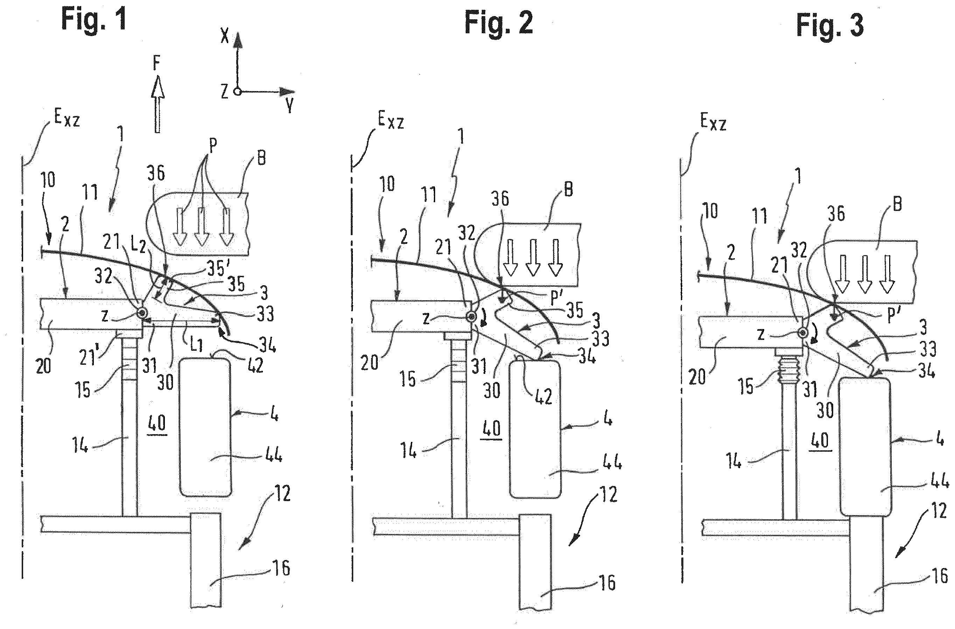

Fig. 1 zeigt schematisch die rechte Hälfte des Vorderwagens 10 eines Fahrzeugs 1 mit einer hinter einer Fahrzeugaußenhaut 11 verborgenen Stoßfängereinrichtung 2. Die linke Hälfte ist hinsichtlich der Stoßfängereinrichtung 2 symmetrisch aufgebaut, so dass hier nur die rechte Hälfte beschrieben wird, wobei die nachstehenden Ausführungen analog für die linke Hälfte zutreffen.

Die Stoßfängereinrichtung 2 ist vorgesehen, um Kräfte P, die bei einer Kollision des Fahrzeugs 1 mit einer Barriere B auftreten, abzustützen und diese Kräfte P kontrolliert in bestimmte Komponenten der Fahrzeugstruktur einzuleiten, um eine kollisionsbedingte Verformung der sich nach hinten an den Vorderwagen 10 anschließenden Fahrgastzelle 12 des Fahrzeugs 1 im Wesentlichen zu verhindern.

Das Fahrzeug 1 weist dazu zumindest zwei parallel zur Fahrzeuglängsrichtung X angeordnete Stoßfängerstützträger 14 auf, von denen hier nur der rechte gezeigt ist. Die Stoßfängereinrichtung 2 weist zumindest einen quer zur Fahrzeuglängsrichtung X angeordneten Stoßfängerquerträger 20 auf, der mit zwei Befestigungsabschnitten 21' versehen ist, an denen der Stoßfängerquerträger 20 jeweils direkt oder mittels einer jeweiligen Verbindungsstruktur 15 an einem zugeordneten Stoßfängerstützträger 14 befestigt oder befestigbar ist. Die Verbindungsstruktur 15 ist dazu ausgebildet, durch auf den Stoßfängerquerträger 20 einwirkende Kollisionskräfte verformt zu werden, um einen Teil der Kollisionsenergie in elastische oder plastische Verformung umzuwandeln.

Die Stoßfängereinrichtung 2 ist zudem an ihrem jeweiligen seitlichen Ende mit einer über den Stoßfängerquerträger 20 seitlich hinaus ragende distalen Krafteinleitungsstruktur 3 versehen, die zumindest zum Teil vor einem ein Fahrzeugrad 4 aufnehmenden Radhaus 40 gelegen ist.

Die jeweilige distale Krafteinleitungsstruktur 3 ist am Stoßfängerquerträger 20 (oder alternativ am benachbarten Stoßfängerstützträger 14) um eine zur Fahrzeughochachse Z im Wesentlichen parallele Achse z schwenkbar gelagert oder abknickbar angebracht, wie es durch den Pfeil in Fig. 2 und Fig. 3 symbolisiert ist.

Die jeweilige distale Krafteinleitungsstruktur 3 weist einen sich quer zur Fahrzeuglängsrichtung X erstreckenden Sperrbalken 30 auf, der mit seinem zur Fahrzeuglängsmittelebene Exz weisenden inneren Endabschnitt 31 mittels eines Gelenks 32 am benachbarten seitlichen Endabschnitt 21 des Stoßfängerquerträgers 20 um die Achse z schwenkbar gelagert ist. Das zur Fahrzeugaußenseite weisende freie Ende 33 des Sperrbalkens 30 bildet einen Eingriffsabschnitt 34 der distalen Krafteinleitungsstruktur 3, der zum Eingriff mit der Lauffläche 42 des Reifens 44 des vorderen Fahrzeugrades 4 ausgebildet ist.

Ein am Sperrbalken 30 fest angebrachter, beispielsweise angeschweißter, oder mit dem Sperrbalken 30 einstückig ausgebildeter Hebelarm 35 bildet einen Aktuatorabschnitt 36 der distalen Krafteinleitungsstruktur 3. Der Sperrbalken 30 erstreckt sich schräg nach vorne und in Richtung Fahrzeugseite geneigt und steht in Fahrtrichtung F nach vorne über den Stoßfängerquerträger 20 hervor.

Kollidiert nun das Fahrzeug 1 mit einer Barriere B, so gerät als Erstes das vordere Ende 35' des Hebelarms 35 in Kontakt mit der Barriere B, wie es in Fig. 2 gezeigt ist. Die dabei auf den Hebelarm 35 entgegen der Fahrtrichtung F beziehungsweise der Kollisionsrichtung einwirkende Kraft P' verschwenkt daraufhin den Sperrbalken 30 bis sein Eingriffsabschnitt 34 an seinem freien Ende 33 in Kontakt mit der Lauffläche 42 des Reifens 44 des vorderen Fahrzeugrades 4 gerät. Erst wenn die Schwenkbewegung der distalen Krafteinleitungsstruktur 3 beendet ist und sich daraufhin der Sperrbalken 30 am Fahrzeugrad 4 abstützt, werden die Kollisionskräfte über das Gelenk 32 und das Fahrzeugrad 4 in die Fahrzeugstruktur eingeleitet. Zu diesem Zeitpunkt ist das Fahrzeugrad 4 durch den Sperrbalken 30 der distalen Krafteinleitungsstruktur 3 bereits in seiner Geradeausstellung fixiert und kann sich nicht mehr verschwenken.

Durch die nun kollisionsbedingt eintretende Verformung des Vorderwagens 10 des Fahrzeugs 1 gerät des Fahrzeugrad 4 mit dem nach hinten gerichteten Abschnitt der Lauffläche 42 in Kontakt mit dem Seitenschweller 16 der Fahrgastzelle 12, wie es in Fig. 3 zu erkennen ist. Der in das Fahrzeugrad 4 eingeleitete Teil der Kollisionskräfte wird daraufhin in den Seitenschweller 16 eingeleitet.

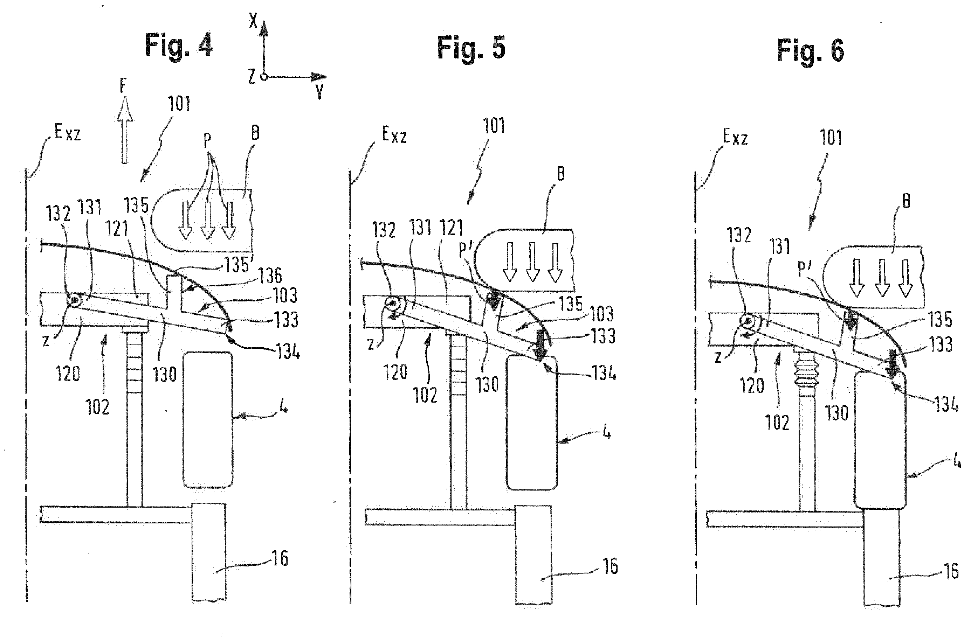

Eine alternative Ausführungsform der erfindungsgemäßen Stoßfängereinrichtung ist in Fig. 4 bis Fig. 6 gezeigt, die im Grundsatz den Darstellungen in Fig. 1 bis Fig. 3 entsprechen und wobei lediglich die Krafteinleitungsstruktur abweichend ausgebildet ist.

Diese alternative Krafteinleitungsstruktur 103 des Fahrzeugs 101 weist ebenfalls einen Sperrbalken 130 auf, der mit einem sich in Fahrtrichtung F nach vorne erstreckenden Hebelarm 135 versehen ist, welcher den Aktuatorabschnitt 136 bildet. Der Sperrbalken 130 ist jedoch wesentlich länger ausgebildet als der Sperrbalken 30 der ersten Ausführungsform. Der Sperrbalken 130 ist mit seinem zur Fahrzeuglängsmittelebene Exz weisenden inneren Endabschnitt 131 mittels eines Gelenks 132 am Stoßfängerquerträger 120 der Stoßfängereinrichtung 102 um die Achse z schwenkbar gelagert, wobei das Gelenk 132 deutlich weiter zur Fahrzeuglängsmittelebene Exz und vom seitlichen Endabschnitt 121 des Stoßfängerquerträgers 120 entfernt gelegen ist als bei er ersten Ausführungsform. Dadurch bedingt ist der Schwenkradius des Eingriffsabschnitts 134 am freien Ende 133 des Sperrbalkens 130 deutlich größer als bei der ersten Ausführungsform.

Durch die dem Fachmann zuzumutende Wahl der Lage des Gelenks 32, 132, der Länge des Sperrbalkens 30, 130 sowie der Ausrichtung und Länge des Hebelarms 34, 134 kann das Timing der Fixierung des Fahrzeugrades bedarfsgerecht und an die übrige Geometrie des Vorderwagens 10 angepasst ausgelegt werden, um eine zuverlässige Fixierung des Fahrzeugrades zu gewährleisten.

Die Erfindung ist nicht auf das obige Ausführungsbeispiel beschränkt, das lediglich der allgemeinen Erläuterung des Kerngedankens der Erfindung dient. Im Rahmen des Schutzumfangs kann die erfindungsgemäße Vorrichtung vielmehr auch andere als die oben beschriebenen Ausgestaltungsformen annehmen.

Bezugszeichen in den Ansprüchen, der Beschreibung und den Zeichnungen dienen lediglich dem besseren Verständnis der Erfindung und sollen den Schutzumfang nicht einschränken.

### Bezugszeichenliste

- 1: Fahrzeug
- 2: Stoßfängereinrichtung
- 3: Krafleitungsstruktur
- 4: Fahrzeugrad
- 10: Vorderwagen
- 11: Fahrzeugaußenhaut
- 12: Fahrgastzelle
- 14: Stoßfängerstützträger
- 15: Verbindungsstruktur
- 16: Seitenschweller
- 20: Stoßfängerquerträger
- 21: seitlicher Endabschnitt
- 21': Befestigungsabschnitt
- 30: Sperrbalken
- 31: Endabschnitt
- 32: Gelenk
- 33: freies Ende
- 34: Eingriffabschnitt
- 35: Hebelarm
- 35': vorderes Ende
- 36: Aktuatorabschnitt
- 40: Radhaus
- 42: Lauffläche
- 44: Reifen
- 101: Fahrzeug
- 102: Stoßfängereinrichtung
- 103: Krafteinleitungsstruktur
- 130: Sperrbalken
- 131: innere Endabschnitt
- 132: Gelenk
- 133: freies Ende
- 135: Hebelarm
- 135': vorderes Ende
- 136: Aktuatorabschnitt

- B: Barriere
- Exz: Fahrzeuglängsmittelebene
- F: Fahrzeugrichtung
- L₁: Länge
- L₂: Länge
- P: Kollisionskraft
- P': einwirkende Kraft
- X: Fahrzeuglängsausrichtung
- Y: Fahrzeugquerrichtung
- Z: Fahrzeughochachse
- Z: parallele Achse

## Patentansprüche

1. Stoßfängereinrichtung für ein Fahrzeug (1) zum Abstützen von bei einer Kollision des Fahrzeugs mit einer Barriere (B) auftretenden Kräften, wobei das Fahrzeug (1; 101) zumindest zwei parallel zur Fahrzeuglängsrichtung (X) angeordnete Stoßfängerstützträger (14) aufweist, die an ihrem in Fahrtrichtung (F) vorderen Ende mit zumindest einem quer zur Fahrzeuglängsrichtung (X) angeordneten Stoßfängerquerträger (20; 120) verbunden sind, und wobei die Stoßfängereinrichtung (2; 102) jeweils eine über den Stoßfängerquerträger (20; 120) seitlich hinaus ragende distale Krafteinleitungsstruktur (3; 103) aufweist, die zumindest zum Teil vor einem ein Fahrzeugrad (4) aufnehmenden Radhaus (40) gelegen ist, wobei die jeweilige distale Krafteinleitungsstruktur (3; 103) am Stoßfängerquerträger (20; 120) oder am Stoßfängerstützträger (14) um eine zur Fahrzeughochachse (Z) parallele Achse (z) schwenkbar gelagert oder abknickbar angebracht ist und einen in Fahrtrichtung (F) nach vorne hervorstehenden Aktuatorabschnitt (36; 136) aufweist,
**dadurch gekennzeichnet,**
**dass** die jeweilige distale Krafteinleitungsstruktur (3; 103) so ausgestaltet ist, dass in deren kollisionsbedingt verschwenktem oder abgeknicktem Zustand das fahrzeugaußenseitige freie Ende (33; 133) der distalen Krafteinleitungsstruktur (3; 103) in Richtung auf die Lauffläche (42) des Fahrzeugrades (4) verlagert ist und das Fahrzeugrad (4) in seiner aktuellen Position fixiert.

2. Stoßfängereinrichtung nach Anspruch 1,
**dadurch gekennzeichnet,**
**dass** die jeweilige distale Krafteinleitungsstruktur (3; 103) so ausgestaltet ist, dass die Fixierung des Fahrzeugrades (4) erfolgt bevor die Kollisionskräfte in die Fahrzeugstruktur eingeleitet werden.

3. Stoßfängereinrichtung nach Anspruch 1 oder 2,
**dadurch gekennzeichnet,**
**dass** die jeweilige distale Krafteinleitungsstruktur (3) einen sich quer zur Fahrzeuglängsrichtung (X) erstreckenden Sperrbalken (30; 130) aufweist, der an dem benachbarten Stoßfängerstützträger (14) oder am Stoßfängerquerträger (20; 120) um die zur Fahrzeughochachse (Z) parallele Achse (z) schwenkbar gelagert oder abknickbar angebracht ist, und
**dass** der Aktuatorabschnitt (36; 136) von einem Hebelarm (35; 135) gebildet ist, der mit dem Sperrbalken (30; 130) verbunden ist.

4. Stoßfängereinrichtung nach Anspruch 3,
**dadurch gekennzeichnet,**
**dass** sich der Hebelarm (35; 135) in Fahrtrichtung (F) schräg in Richtung zur Fahrzeugaußenseite hin erstreckt.

5. Stoßfängereinrichtung nach Anspruch 3 oder 4,
**dadurch gekennzeichnet,**
**dass** das zur Fahrzeugaußenseite weisende freie Ende (33, 133) des Sperrbalkens (30, 130) einen Eingriffsabschnitt (34, 134) der distalen Krafteinleitungsstruktur (3, 103) bildet, der zum Eingriff mit der Lauffläche (42) des Reifens (44) des vorderen Fahrzeugrades (4) ausgebildet ist, um das Fahrzeugrad zu fixieren.

6. Stoßfängereinrichtung nach einem der Ansprüche 3 bis 5,
**dadurch gekennzeichnet,**
**dass** die Länge (L₁) des Sperrbalkens (30; 130), gemessen von der Achse (z) bis zum freien distalen Ende (33; 133) des Sperrbalkens (30; 130), derart bemessen ist, dass das freie Ende (33; 133) des Sperrbalkens (30; 130) in Kontakt mit dem Fahrzeugrad (4) steht, wenn die distale Krafteinleitungsstruktur (3) um die Achse (z) entgegen der Fahrtrichtung (F) nach hinten verschwenkt oder abgeknickt ist.

7. Stoßfängereinrichtung nach Anspruch 6,
**dadurch gekennzeichnet,**
**dass** die Länge (L₂) des Aktuatorabschnitts (36; 136), gemessen vom Sperrbalken (30; 130) bis zum vorderen Ende (35'; 135') des Aktuatorabschnitts (36; 136), derart bemessen ist, dass bei einer Kollision des Fahrzeugs (1; 101) mit der sich parallel zur Fahrzeugquerrichtung (Y) erstreckenden Barriere (B) das freie Ende (33; 133) des Sperrbalkens (30; 130) in Kontakt mit dem Fahrzeugrad (4) gerät bevor die Barriere (B) auf den Stoßfängerquerträger (20; 120) trifft.

8. Stoßfängereinrichtung nach einem der vorhergehenden Ansprüche,
**dadurch gekennzeichnet,**
**dass** die Stoßfängereinrichtung so ausgebildet ist, dass die Kollisionskräfte erst dann über das Gelenk (32, 132) und das Fahrzeugrad (4) in die Fahrzeugstruktur eingeleitet werden, wenn die Schwenkbewegung der distalen Krafteinleitungsstruktur (3, 103) beendet ist und sich daraufhin der Sperrbalken (30, 130) am Fahrzeugrad (4) abstützt.

9. Stoßfängereinrichtung nach einem der vorhergehenden Ansprüche,
**dadurch gekennzeichnet,**
**dass** die Achse (z) im Bereich des seitlichen Endabschnitts (21) des Stoßfängerquerträgers (20) liegt.

10. Stoßfängereinrichtung nach einem der Ansprüche 1 bis 8,
**dadurch gekennzeichnet,**
**dass** die Achse (z) vom seitlichen Endabschnitt (121) des Stoßfängerquerträgers (120) zur Fahrzeuglängsmittelebene (Exz) hin abgewandt liegt.

11. Stoßfängereinrichtung nach einem der Ansprüche 1 bis 8,
**dadurch gekennzeichnet,**
**dass** die Achse (z) im Bereich des vorderen Endes des benachbarten Stoßfängerstützträgers (14) liegt.

12. Stoßfängereinrichtung nach einem der vorhergehenden Ansprüche,
**dadurch gekennzeichnet,**
**dass** die Achse (z) außerhalb des Eingriffsbereichs der Barriere (B) mit dem Fahrzeug (1; 101) liegt.

13. Fahrzeug (1; 101) mit zumindest einer Stoßfängereinrichtung (2; 102) nach einem der vorhergehenden Ansprüche.

## Claims

1. Bumper device for a vehicle (1) for supporting forces which occur during a collision of the vehicle with a barrier (B), wherein the vehicle (1; 101) has at least two bumper support members (14) which are arranged parallel to the vehicle longitudinal direction (X) and which are connected, at the front end thereof in the direction of travel (F), to at least one bumper crossmember (20; 120) arranged transversely with respect to the vehicle longitudinal direction (X), and wherein the bumper device (2; 102) in each case has a distal force introduction structure (3; 103) which projects laterally beyond the bumper crossmember (20; 120) and which is situated at least in part in front of a wheelhouse (40) accommodating a vehicle wheel (4), wherein the respective distal force introduction structure (3; 103) is mounted on the bumper crossmember (20; 120) or on the bumper support member (14) so as to be pivotable about an axis (z) parallel to the vehicle vertical axis (Z), or is attached thereto with the ability to be bent away, and has an actuator portion (36; 136) protruding forwards in the direction of travel (F),
**characterized**
**in that** the respective distal force introduction structure (3; 103) is configured in such a way that, in the collision-induced pivoted or bent-away state thereof, the free end (33; 133), which is on the vehicle outer side, of the distal force introduction structure (3; 103) is displaced in the direction of the tread (42) of the vehicle wheel (4) and fixes the vehicle wheel (1) in its current position.

2. Bumper device according to Claim 1,
**characterized**
**in that** the respective distal force introduction structure (3; 103) is configured in such a way that the fixing of the vehicle wheel (4) occurs before the collision forces are introduced into the vehicle structure.

3. Bumper device according to Claim 1 or 2,
**characterized**
**in that** in respective distal force introduction structure (3) has a locking beam (30; 130) which extends transversely with respect to the vehicle longitudinal direction (X) and which is mounted on the adjacent bumper support member (14) or on the bumper crossmember (20; 120) so as to be pivotable about the axis (z) parallel to the vehicle vertical axis (Z), or is attached thereto with the ability to be bent away, and
**in that** the actuator portion (36; 136) is formed by a lever arm (35; 135) which is connected to the locking beam (30; 130).

4. Bumper device according to Claim 3,
**characterized**
**in that**, in the direction of travel (F), the lever arm (35; 135) extends obliquely in the direction of the vehicle outer side.

5. Bumper device according to Claim 3 or 4,
**characterized**
**in that** the free end (33, 133) of the locking beam (30, 130) that is directed towards the vehicle outer side forms an engagement portion (34, 134) of the distal force introduction structure (3, 103) that is designed to engage with the tread (42) of the tyre (44) of the front vehicle wheel (4) in order to fix the vehicle wheel.

6. Bumper device according to one of Claims 3 to 5,
**characterized**
**in that** the length (L₁) of the locking beam (30; 130) as measured from the axis (z) to the free distal end (33; 133) of the locking beam (30; 130) is dimensioned in such a way that the free end (33; 133) of the locking beam (30; 130) is in contact with the vehicle wheel (4) if the distal force introduction structure (3) is pivoted or bent away rearwardly about the axis (z) counter to the direction of travel (F).

7. Bumper device according to Claim 6,
**characterized**
**in that** the length (L₂) of the actuator portion (36; 136) as measured from the locking beam (30; 130) to the front end (35; 135') of the actuator portion (36; 136) is dimensioned in such a way that, in the event of a collision of the vehicle (1; 101) with the barrier (B) extending parallel to the vehicle transverse direction (Y), the free end (33; 133) of the locking beam (30; 130) comes into contact with the vehicle wheel (4) before the barrier (B) impinges the bumper crossmember (20; 120).

8. Bumper device according to one of the preceding claims,
**characterized**
**in that** the bumper device is designed in such a way that the collision forces are introduced into the vehicle structure via the joint (32, 132) and the vehicle wheel (4) only when the pivoting movement of the distal force introduction structure (3, 103) has ended and the locking beam (30, 130) is subsequently supported on the vehicle wheel (4).

9. Bumper device according to one of the preceding claims,
**characterized**
**in that** the axis (z) is situated in the region of the lateral end portion (21) of the bumper crossmember (20).

10. Bumper device according to one of Claims 1 to 8,
**characterized**
**in that** the axis (z) is situated remotely from the lateral end portion (121) of the bumper crossmember (120) towards the vehicle longitudinal centre plane (Exz).

11. Bumper device according to one of Claims 1 to 8,
**characterized**
**in that** the axis (z) is situated in the region of the front end of the adjacent bumper support member (14).

12. Bumper device according to one of the preceding claims,
**characterized**
**in that** the axis (z) is situated outside the engagement region of the barrier (B) with the vehicle (1; 101).

13. Vehicle (1; 101) having at least one bumper device (2; 102) according to one of the preceding claims.

## Revendications

1. Dispositif pare-chocs pour un véhicule (1) servant à supporter des forces survenant en cas de collision du véhicule avec une barrière (B), le véhicule (1 ; 101) comprenant au moins deux poutres de support de pare-chocs (14) disposées parallèlement à la direction longitudinale de véhicule (X), lesquelles sont, à leur extrémité avant dans le sens de conduite (F), reliées à au moins une traverse de pare-chocs (20 ; 120) disposée transversalement à la direction longitudinale de véhicule (X), et le dispositif pare-chocs (2 ; 102) comprenant respectivement une structure distale d'introduction de force (3 ; 103) dépassant latéralement au-delà de la traverse de pare-chocs (20 ; 120), laquelle structure est placée au moins en partie devant un passage de roue (40) recevant une roue de véhicule (4), la structure distale d'introduction de force (3 ; 103) respective étant montée pivotante ou installée de manière pliable autour d'un axe (z) parallèle à l'axe vertical de véhicule (Z) sur la traverse de pare-chocs (20 ; 120) ou sur la poutre de support de pare-chocs (14) et comprenant une partie actionneur (36 ; 136) faisant saillie vers l'avant dans le sens de conduite (F),
**caractérisé en ce que**
la structure distale d'introduction de force (3 ; 103) respective est configurée de telle sorte que, dans son état pivoté ou plié dû à la collision, l'extrémité libre (33 ; 133), située du côté extérieur du véhicule, de la structure distale d'introduction de force (3 ; 103) est décalée en direction de la bande de roulement (42) de la roue de véhicule (4) et fixe la roue de véhicule (4) dans sa position actuelle.

2. Dispositif pare-chocs selon la revendication 1,
**caractérisé en ce que**
la structure distale d'introduction de force (3 ; 103) respective est configurée de telle sorte que la fixation de la roue de véhicule (4) s'effectue avant que les forces de collision ne soient introduites dans la structure de véhicule.

3. Dispositif pare-chocs selon la revendication 1 ou 2,
**caractérisé en ce que**
la structure distale d'introduction de force (3) respective comprend une barre de blocage (30 ; 130) s'étendant transversalement à la direction longitudinale de véhicule (X), laquelle barre est montée pivotante ou installée de manière pliable autour de l'axe (z) parallèle à l'axe vertical de véhicule (Z) sur la poutre de support de pare-chocs (14) adjacente ou sur la traverse de pare-chocs (20 ; 120), et
**en ce que** la partie actionneur (36 ; 136) est formée par un bras de levier (35 ; 135) qui est relié à la barre de blocage (30 ; 130).

4. Dispositif pare-chocs selon la revendication 3,
**caractérisé en ce que**
le bras de levier (35 ; 135) s'étend dans le sens de conduite (F) de manière oblique en direction du côté extérieur de véhicule.

5. Dispositif pare-chocs selon la revendication 3 ou 4,
**caractérisé en ce que**
l'extrémité libre (33, 133), orientée vers le côté extérieur de véhicule, de la barre de blocage (30, 130) forme une partie d'entrée en prise (34, 134) de la structure distale d'introduction de force (3, 103), laquelle partie est réalisée pour venir en prise avec la bande de roulement (42) du pneu (44) de la roue avant de véhicule (4), afin de fixer la roue de véhicule.

6. Dispositif pare-chocs selon l'une des revendications 3 à 5,
**caractérisé en ce que**
la longueur (L₁) de la poutre de blocage (30 ; 130), mesurée à partir de l'axe (z) jusqu'à l'extrémité distale libre (33 ; 133) de la poutre de blocage (30 ; 130), est dimensionnée de telle sorte que l'extrémité libre (33 ; 133) de la poutre de blocage (30 ; 130) est en contact avec la roue de véhicule (4) lorsque la structure distale d'introduction de force (3) est pivotée ou pliée vers l'arrière autour de l'axe (z) en sens inverse du sens de conduite (F).

7. Dispositif pare-chocs selon la revendication 6,
**caractérisé en ce que**
la longueur (L₂) de la partie actionneur (36 ; 136), mesurée à partir de la poudre de blocage (30 ; 130) jusqu'à l'extrémité avant (35' ; 135') de la partie actionneur (36 ; 136), est dimensionnée de telle sorte qu'en cas de collision du véhicule (1 ; 101) avec la barrière (B) s'étendant parallèlement à la direction transversale de véhicule (Y), l'extrémité libre (33 ; 133) de la poutre de blocage (30 ; 130) vient en contact avec la roue de véhicule (4) avant que la barrière (B) ne frappe la traverse de pare-chocs (20 ; 120).

8. Dispositif pare-chocs selon l'une des revendications précédentes,
**caractérisé en ce que**
le dispositif pare-chocs est réalisé de telle sorte que les forces de collision ne sont introduites dans la structure de véhicule par le biais de l'articulation (32, 132) et de la roue de véhicule (4) que lorsque le mouvement de pivotement de la structure distale d'introduction de force (3, 103) est achevé et ensuite la poutre de blocage (30, 130) est supportée sur la roue de véhicule (4).

9. Dispositif pare-chocs selon l'une des revendications précédentes,
**caractérisé en ce que**
l'axe (z) se situe dans la région de la partie d'extrémité latérale (21) de la traverse de pare-chocs (20).

10. Dispositif pare-chocs selon l'une des revendications 1 à 8,
**caractérisé en ce que**
l'axe (z) se situe à l'opposé de la partie d'extrémité latérale (121) de la traverse de pare-chocs (120) en direction du plan médian longitudinal de véhicule (Exz).

11. Dispositif pare-chocs selon l'une des revendications 1 à 8,
**caractérisé en ce que**
l'axe (z) se situe dans la région de l'extrémité avant de la poutre de support de pare-chocs (14) adjacente.

12. Dispositif pare-chocs selon l'une des revendications précédentes,
**caractérisé en ce que**
l'axe (z) se situe à l'extérieur de la région d'entrée en prise de la barrière (B) avec le véhicule (1 ; 101).

13. Véhicule (1 ; 101) comportant au moins un dispositif pare-chocs (2 ; 102) selon l'une des revendications précédentes.
